# EUROPÄISCHE PATENTSCHRIFT

(11) **EP 4 031 346 B1**
(45) Veröffentlichungstag und Bekanntmachung des Hinweises auf die Patenterteilung: **04.12.2024**
(21) Anmeldenummer: 20764987.2
(22) Anmeldetag: 01.09.2020
(51) Int. Cl.: B29C 45/16, B29C 45/00, B29C 45/14, B29C 45/78, B29K 9/00, B29K 77/00, B29L 31/50

(54) **VERFAHREN ZUR HERSTELLUNG EINES GUMMI-KUNSTSTOFF-VERBUNDES**
PROCESS FOR MANUFACTURING A RUBBER-PLASTIC COMPOSITE
PROCÉDÉ DE FABRICATION D'UN COMPOSITE EN MATIÈRE GOMME-PLASTIQUE

(30) Priorität: 16.09.2019 DE 102019214073
(43) Veröffentlichungstag der Anmeldung: 27.07.2022
(73) Patentinhaber: Continental Reifen Deutschland GmbH, 30175 Hannover (DE)
(72) Erfinder: EFIMOV, Konstantin, 30165 Hannover (DE); DREIER, Anna-Lena, 30165 Hannover (DE); HÜLSMANN, Klaus, 45128 Essen (DE); PAWLIK, Andreas, 45128 Essen (DE); KORMANN, Marco, 91074 Herzogenaurach (DE); DREXLER, Maximilian, 91074 Herzogenaurach (DE)
(74) Vertreter: Continental Corporation
(86) Internationale Anmeldenummer: PCT/EP2020/074257
(87) Internationale Veröffentlichungsnummer: WO 2021/052740

(56) Entgegenhaltungen:
- EP-A1- 0 916 277
- EP-A1- 1 555 110
- EP-A1- 2 746 046
- WO-A1-98/43795
- JP-A- 2010 022 582
- US-A- 5 572 804
- US-A- 5 895 695
- US-A1- 2005 155 690
- US-A1- 2015 306 854
- UNKNOWN: "Fest verbunden ganz ohne Haftvermittler, Hochleistungspolyamide für neue Kunststoff-Kautschuk-Verbunde", PLASTVERARBEITER, 29 February 2016 (2016-02-29), pages 1, XP055751608
- BEX GERT-JAN ET AL: "Two-component injection moulding of thermoset rubber in combination with thermoplastics by thermally separated mould cavities and rapid heat cycling", THE INTERNATIONAL JOURNAL OF ADVANCED MANUFACTURING TECHNOLOGY, SPRINGER, LONDON, vol. 92, no. 5, 6 April 2017 (2017-04-06), pages 2599 - 2607, XP036303502, ISSN: 0268-3768, [retrieved on 20170406], DOI: 10.1007/S00170-017-0341-Y

## Beschreibung

Die vorliegende Erfindung betrifft ein Verfahren zur Herstellung eines Gummi-Kunststoff-Verbundes, umfassend die Schritte (a) des Formens eines unvulkanisierten Elastomers, (b) des teilweise Vulkanisierens des geformten Elastomers bei einer Temperatur von mindestens 140°C bis zu einem Vulkanisationsgrad im Bereich von 10 bis 40%, (c) des Abkühlens des teilweise vulkanisierten Elastomers auf eine Temperatur von weniger als 100°C innerhalb von weniger als 20 Minuten, (d) des Überspritzens des teilweise vulkanisierten Elastomers mit einem Kunststoff, und (e) des Wärmebehandelns des mit einem Kunststoff überspritzten, teilweise vulkanisierten Elastomers bei einer Temperatur im Bereich von 100°C bis 170°C für eine Dauer von 5 Minuten bis 5 Stunden, um die Vulkanisation zu vervollständigen und einen Gummi-Kunststoff-Verbund auszubilden.

Elastomere finden in zahlreichen Bereichen Anwendung, beispielsweise in Form von Dichtungen, Dämpfungselementen, Abdeckungen oder Membranen. Wenn Gummiteile dauerhaft befestigt werden müssen, haben sich Verbundteile solcher Elastomere mit einer Hartkomponente bewährt. Die Hartkomponente besteht beispielsweise im Automobilbau traditionell aus Metall. Um allerdings insbesondere das Gewicht deutlich zu senken, d.h. um Leichtbau zu realisieren, werden heute vermehrt Kunststoffteile als Hartkomponente eingesetzt. Diese sind leicht, korrodieren nicht und können im Spritzgussverfahren zu komplexen Formteilen verarbeitet werden. Ein Verbund aus einer Gummi- und einer Kunststoff-Komponente wird meistens durch Einsatz eines Haftvermittlers oder eines Klebstoffes erzeugt. Allerdings erfordert der Einsatz von Haftvermittlern oder Klebstoffen einen mehrstufigen, aufwändigen und häufig auch umweltbelastenden Prozess. Weiterhin ist die Klebestärke nicht immer ausreichend.

Um dieses Problem zu lösen, wurde der sogenannte Kunststoff-Kautschuk-Verbundprozess (auch als K&K-Verfahren bezeichnet) vorgeschlagen. Bestimmte Gummi/Kunststoff-Kombinationen wie SBR/PPE oder XNBR/PA können mit diesem Verfahren ohne Haftvermittler oder Klebstoff direkt miteinander verbunden werden. Dazu wird die Gummi-Komponente auf den Kunststoff aufgebracht und dann erst - in Gegenwart des Kunststoffs - vulkanisiert, wodurch eine Anhaftung der Gummikomponente an den Kunststoff erreicht wird. Dieses Verfahren kann einstufig oder zweistufig durchgeführt werden. Beim zweistufigen Spritzgießverfahren geht man ähnlich vor wie bei der zweistufigen Herstellung von Zweifarbenspritzteilen. Dazu wird zunächst das steife Formteil beispielsweise durch Spritzgießen, Extrudieren, Prägen oder Pressen hergestellt und in einem zweiten Schritt mit der ggf. vorgeformten Kautschuk-Komponente beaufschlagt und den Vulkanisationsbedingungen des Kautschuks ausgesetzt. Das Beaufschlagen des steifen Formteils mit dem Kautschuk kann durch Pressen, Prägen, Spritzgießen oder Extrudieren geschehen. Beim einstufigen Spritzgießverfahren arbeitet man analog zum einstufigen Zweifarbenspritzgießverfahren. In diesem Fall ist eine Spritzgießmaschine für die Thermoplastverarbeitung, die andere für die Kautschukverarbeitung ausgerüstet. Das Werkzeug bzw. die Kavität für die Kautschukmasse wird auf die vorgegebene Vulkanisiertemperatur aufgeheizt, die unter der Erstarrungstemperatur der Kunstoffmasse liegen sollte. Das K&K-Verfahren ist beispielsweise in JP 2010022582 A,

WO 2011/138300 A1 sowie in *"*High-Performance Polymers in Plastic-Rubber Composites" von Evonik Industries (siehe https://www.vestamid.com/sites/lists/RE/DocumentsHP/Plastic-rubbercomposites-EN.pdf) beschrieben.

Die für das K&K-Verfahren geeigneten Kunststoff-Komponenten müssen allerdings äußerst steif, hart und thermisch stabil sein, damit sie den Vulkanisationsvorgang überstehen. Dadurch sind diese Kunststoff-Kautschuk-Verbundteile für bestimmte Anwendungen, wie beispielsweise in Sportschuhen, ungeeignet. Weiterhin sind die für das K&K-Verfahren erforderlichen Spritzwerkzeuge in der Regel sehr teuer.

Der vorliegenden Erfindung liegt daher die Aufgabe zugrunde, ein Verfahren zur Herstellung eines Gummi-Kunststoff-Verbundes bereitzustellen, welches die vorstehend beschriebenen Nachteile nicht aufweist. Insbesondere soll ein Verfahren bereitgestellt werden, das einen Verbund zwischen Gummi und Kunststoff ohne die Verwendung von Haftvermittlern ermöglicht, welches nicht nur zur Herstellung von Gummi-Kunststoff-Verbünden mit steifer Kunststoff-Komponente geeignet ist und welches mit einfacheren bzw. günstigeren Werkzeugen durchgeführt werden kann.

Diese Aufgabe wird durch die in den Ansprüchen gekennzeichneten Ausführungsformen gelöst.

Insbesondere wird erfindungsgemäß ein Verfahren zur Herstellung eines Gummi-Kunststoff-Verbundes bereitgestellt, umfassend die Schritte (a) des Formens eines unvulkanisierten Elastomers, (b) des teilweise Vulkanisierens des geformten Elastomers bei einer Temperatur von mindestens 140°C bis zu einem Vulkanisationsgrad im Bereich von 10 bis 40%, (c) des Abkühlens des teilweise vulkanisierten Elastomers auf eine Temperatur von weniger als 100°C innerhalb von weniger als 20 Minuten, (d) des Überspritzens des teilweise vulkanisierten Elastomers mit einem Kunststoff, und (e) des Wärmebehandelns des mit einem Kunststoff überspritzten, teilweise vulkanisierten Elastomers bei einer Temperatur im Bereich von 100°C bis 170°C für eine Dauer von 5 Minuten bis 5 Stunden, um die Vulkanisation zu vervollständigen und einen Gummi-Kunststoff-Verbund auszubilden.

Der vorliegenden Erfindung liegt die Überlegung zugrunde, dass die Nachteile des Klebeverfahrens sowie des K&K-Verfahren vermieden werden könnten, wenn der ausvulkanisierte Gummiteil mit dem Kunststoff überspritzt werden könnte, wenn also das K&K-Verfahren invers durchgeführt werden könnte. Allerdings ist die Gummi-Komponente nach der Vulkanisation nicht mehr aktiv und geht dann keine stabile Verbindung mehr mit dem Kunststoff ein. Es wurde nun aber überraschend gefunden, dass dieses Problem erfindungsgemäß gelöst werden kann, indem die Gummi-Komponente zunächst nur anvulkanisiert und danach mit Kunststoff überspritzt wird. Da der Gummiteil noch nicht vollständig ausgeheizt ist, kann die stabile Verbindung mit dem Kunststoff beim Spritzvorgang bzw. bei einer Wärmenachbehandlung ausgebildet werden. Dadurch erreicht die Gummi-Komponente den optimalen Vulkanisationsgrad und die Bindung zwischen Gummi und Kunststoff wird verstärkt bzw. vervollständigt.

In Schritt (a) des erfindungsgemäßen Verfahrens wird zunächst ein unvulkanisiertes Elastomer geformt. Unter einem Elastomer werden formfeste, aber elastisch verformbare Kunststoffe verstanden, deren Glasübergangspunkt sich unterhalb der Raum- bzw. Einsatztemperatur befindet. Für das erfindungsgemäße Verfahren kann jedwedes für die jeweils vorgesehene Anwendung geeignete unvulkanisierte Elastomer verwendet werden. Vorzugsweise wird das unvulkanisierte Elastomer aus der Gruppe, bestehend aus Polyacrylat-Kautschuk (ACM), Ethylen-Acrylat-Kautschuk (AEM/EAM), Ethylen-Propylen-Dien-Mischpolymerisat (EPDM), Ethylen-Propylen-Mischpolymerisat (EPM), Fluor-Kautschuk (FKM), (teil)hydriertem Nitrilkautschuk (HNBR), Carboxylgruppen-haltigem Nitril-Kautschuk (XNBR), Nitril-Butadien-Kautschuk (NBR), Natur-Kautschuk (NR), Styrol-Butadien-Kautschuk (SBR), Methyl-Vinyl-Silicon-Kautschuk (VMQ), Polybutadien-Kautschuk (BR), Polyisopren-Kautschuk (IR) und Kombinationen davon, ausgewählt. Besonders bevorzugt wird als unvulkanisiertes Elastomer (teil)hydrierter Nitrilkautschuk (HNBR) verwendet. Das unvulkanisierte Elastomer kann unverschnitten oder mit wenigsten einer weiteren Kautschukkomponente, insbesondere mit einem der vorgenannten Kautschuktypen, verschnitten verwendet werden, beispielsweise in Form eines EPM/EPDM- oder SBR/BR-Verschnittes. Von besonderer Bedeutung ist dabei EPM oder EPDM oder ein EPM/EPDM-Verschnitt.

Das unvulkanisierte Elastomer kann zusammen mit geeigneten Mischungsingredienzien verwendet werden, die beispielsweise wenigstens einen Vernetzer oder ein Vernetzersystem (Vernetzungsmittel und Beschleuniger) umfassen. Wegen der besseren Wärmealterungsbeständigkeit werden bevorzugt Peroxide als Vernetzer eingesetzt. Weitere Mischungsingredienzien sind beispielsweise noch Füllstoffe, Vulkanisationsaktivatoren, Öle, Verarbeitungshilfsmittel, Weichmacher und/oder Alterungsschutzmittel sowie gegebenenfalls weitere Zusatzstoffe wie beispielsweise Fasern und Farbpigmente. Diesbezüglich wird auf den allgemeinen Stand der Elastomermischungstechnologie verwiesen. Gemäß einer bevorzugten Ausführungsform der vorliegenden Erfindung enthält das Elastomer Zusatzstoffe, ausgewählt aus der Gruppe, bestehend aus Vulkanisationsmitteln, Vulkanisationsaktivatoren, Ölen und Füllstoffen.

Das unvulkanisierte Elastomer wird geformt, d.h. in die vorgesehene Form gebracht. Dies kann durch jedwedes geeignete, in der Kautschuktechnologie bekannte Verfahren erfolgen, beispielsweise durch Pressen, Prägen, Spritzgießen oder Extrudieren. Gemäß einer bevorzugten Ausführungsform der vorliegenden Erfindung wird Schritt (a) des erfindungsgemäßen Verfahrens in einer Vulkanisationspresse durchgeführt. Dies hat den Vorteil, dass der nächste Schritt (b) der Vulkanisation gleichzeitig bzw. direkt im Anschluss durchgeführt werden kann.

In Schritt (b) des erfindungsgemäßen Verfahrens wird das geformte Elastomers bei einer Temperatur von mindestens 140°C bis zu einem Vulkanisationsgrad im Bereich von 10 bis 40% vulkanisiert. Der Schritt des Vulkanisierens kann in üblicher Weise erfolgen. Vorzugsweise wird die Vulkanisation in einer Vulkanisationspresse durchgeführt. Die optimalen Vulkanisationsbedingungen hängen von der gewählten Kautschukmischung und insbesondere von dem verwendeten Vulkanisationssystem sowie der gewählten Form des geformten Elastomers ab. Geeignete Vulkanisationstemperaturen liegen beispielsweise im Bereich von 140°C bis 250°C, vorzugsweise im Bereich von 170°C bis 200°C. Die Vulkanisationszeiten richten sich außer nach der Elastomermischung nach den Vulkanisationstemperaturen sowie nach der Geometrie der Teile. Sie liegen im Allgemeinen zwischen 30 Sekunden und 15 Minuten; niedrigere Temperaturen und dickere Kautschukteile erfordern längere Zeiten. Die Vulkanisation erfolgt vorzugsweise unter erhöhtem Druck, insbesondere unter einem Druck im Bereich von 10 bis 200 bar.

Erfindungsgemäß wird die Vulkanisation nicht vollständig durchgeführt, sondern nur bis zu einem Vulkanisationsgrad im Bereich von 10 bis 40%. Vorzugsweise wird die Vulkanisation bis zu einem Vulkanisationsgrad von 10 bis 30% durchgeführt, noch bevorzugter bis zu einem Vulkanisationsgrad von 10 bis 20%. Der Vulkanisationsgrad kann durch jedes geeignete, dem Fachmann bekannte Verfahren bestimmt werden. Beispielsweise kann dieser aus einer Rheometerkurve bestimmt werden, die nach DIN 53529 gemessen wurde. Dabei wird ein Vulkanisationsgrad von 0% für den geringsten Wert der Zugspannung über der Zeit und ein Vulkanisationsgrad von 100% für den höchsten Wert der Zugspannung über die Zeit definiert. Gemäß einer bevorzugten Ausführungsform der vorliegenden Erfindung wird die Vulkanisation zumindest bis zur Formstabilität des geformten Elastomers, d.h. bis zum sogenannten "curing point" durchgeführt. Dieser kann ebenfalls einer Rheometerkurve entnommen werden. Dies hat den Vorteil, dass sich die Form des Elastomers in den weiteren Verfahrensschritten nicht mehr ändert.

Gemäß einer bevorzugten Ausführungsform der vorliegenden Erfindung werden die Schritte a) und b) gleichzeitig in einer Vulkanisationspresse durchgeführt. Auf diese Weise kann der Herstellungsprozess deutlich vereinfacht werden.

In Schritt (c) des erfindungsgemäßen Verfahrens wird das teilweise vulkanisierte Elastomer auf eine Temperatur von weniger als 100°C innerhalb von weniger als 20 Minuten abgekühlt. Dieser Schritt dient dazu, eine weitere Vulkanisation des teilweise vulkanisierten Elastomers aufgrund von Restwärme zu minimieren bzw. vollständig zu vermeiden. Gemäß einer bevorzugten Ausführungsform des erfindungsgemäßen Verfahrens erfolgt die Abkühlung in weniger als 10 Minuten, noch bevorzugter in weniger als 5 Minuten. Es ist weiterhin bevorzugt, dass das teilweise vulkanisierte Elastomer auf eine Temperatur von weniger als 80°C abgekühlt wird, noch bevorzugter auf weniger als 60°C. Gemäß einer besonders bevorzugten Ausführungsform der vorliegenden Erfindung wird das teilweise vulkanisierte Elastomer auf eine Temperatur von weniger als 80°C innerhalb von weniger als 5 Minuten abgekühlt.

In Schritt (d) des erfindungsgemäßen Verfahrens wird das teilweise vulkanisierte Elastomers mit einem Kunststoff überspritzt. Der Kunststoff kann jedweder für die jeweils vorgesehene Anwendung geeignete Kunststoff sein. Vorzugsweise wird der Kunststoff aus der Gruppe, bestehend aus Polyamid (PA), Polyphenylenether (PPE), Polyphthalamid (PPA), Polyurethan (PU), Polyetherblockamid (PEBA) und Kombinationen davon, ausgewählt. Gemäß einer besonders bevorzugten Ausführungsform liegt dieser Kunststoff in Form eines thermoplastischen Elastomers (TPE) oder als Thermoplast-Elastomer-Legierung mit einem Kautschuk, ausgewählt aus der Gruppe, bestehend aus Polyacrylat-Kautschuk (ACM), Ethylen-Acrylat-Kautschuk (AEM/EAM), Ethylen-Propylen-Dien-Mischpolymerisat (EPDM), Ethylen-Propylen-Mischpolymerisat (EPM), Fluor-Kautschuk (FKM), (teil)hydriertem Nitrilkautschuk (HNBR), Carboxylgruppen-haltigem Nitril-Kautschuk (XNBR), Nitril-Butadien-Kautschuk (NBR), Natur-Kautschuk (NR), Styrol-Butadien-Kautschuk (SBR), Methyl-Vinyl-Silicon-Kautschuk (VMQ), Polybutadien-Kautschuk (BR), Polyisopren-Kautschuk (IR) und Kombinationen davon, in Form thermoplastischer Vulkanisate (TPE-V oder TPV) vor.

Es können für das erfindungsgemäße Verfahren je nach vorgesehener Anwendung alle geeigneten Kombinationen aus Kunststoff und Elastomer verwendet werden. Gemäß einer bevorzugten Ausführungsform der vorliegenden Erfindung wird eine der folgenden Kunststoff/Elastomer-Kombination verwendet: ACM mit PA; AEM/EAM mit PA; AEM/EAM mit PPA; EPDM mit PPE; EPDM mit PA; FKM mit PA; FKM mit PPA; HNBR mit PA; HNBR mit PPA; NR/SBR mit PPE; SBR mit PPE; SBR/EPDM mit PPE; SBR/NBR mit PPE; VMQ mit PA; VMQ mit PPA; XNBR mit PA. Ganz besonders bevorzugt wird als Kunststoff Polyamid (PA) und als Elastomer (teil)hydrierter Nitrilkautschuk (HNBR) verwendet. Grundsätzlich kann dabei jedes Polyamid verwendet werden, beispielsweise PA6, PA66, PA610, PA88, PA612, PA810, PA108, PA9, PA613, PA614, PA812, PA128, PA1010, PA10, PA814, PA148, PA1012, PA1 1 , PA1014, PA1212 und PA12. Unter diesen sind insbesondere PA12 und PA612 bevorzugt.

Der Kunststoff kann weitere geeignete Zusatzstoffe enthalten. Gemäß einer bevorzugten Ausführungsform der vorliegenden Erfindung enthält der Kunststoff jedoch keine Verstärker und Füllstoffe, insbesondere keine Glasfasern oder Graphit.

Der Schritt des Überspritzens des teilweise vulkanisierten Elastomers mit dem Kunststoff kann in jedweder dem Fachmann bekannten Art und Weise erfolgen. Gemäß einer bevorzugten Ausführungsform der vorliegenden Erfindung wird das teilweise vulkanisierte Elastomer nach Schritt (c) in einer Spritzgussform platziert und in dieser Schritt (d) durchgeführt. Es wurde im Rahmen der vorliegenden Erfindung gefunden, dass die üblichen Temperaturen und Drücke während des Spritzvorganges sowie dessen übliche Dauer ausreichen, damit die Vulkanisation der Gummi-Komponente fortgesetzt wird.

In Schritt (e) des erfindungsgemäßen Verfahrens wird das mit einem Kunststoff überspritzte, teilweise vulkanisierte Elastomer bei einer Temperatur im Bereich von 100°C bis 170°C für eine Dauer von 5 Minuten bis 5 Stunden wärmebehandelt, um die Vulkanisation zu vervollständigen und einen Gummi-Kunststoff-Verbund auszubilden. Gemäß einer bevorzugten Ausführungsform erfolgt die Wärmebehandlung bei einer Temperatur von mindestens 100°C und weniger als 140°C und noch bevorzugter bei einer Temperatur von mindestens 120°C und weniger als 140°C. Gemäß einer weiteren bevorzugten Ausführungsform erfolgt die Wärmebehandlung für eine Dauer von 1 bis 3 Stunden. Es ist besonders bevorzugt, die Wärmebehandlung bei einer Temperatur von mindestens 120°C und weniger als 140°C für eine Dauer von 1 bis 3 Stunden durchzuführen. Die Wärmebehandlung kann insbesondere bei einer Temperatur von 130°C für eine Dauer von etwa 2 Stunden durchgeführt werden. Im Unterschied zur Vulkanisation wird die Wärmebehandlung vorzugsweise unter einem Druck im Bereich von 0,5 bis 5 bar, besonders bevorzugt unter Normaldruck durchgeführt.

Das erfindungsgemäße Verfahren hat gegenüber den herkömmlichen Verfahren den Vorteil, dass auf den Einsatz von Haftvermittlern bzw. Klebstoffen zum Verbinden von Gummi und Kunststoff verzichtet werden kann. Vorzugsweise umfasst das erfindungsgemäße Verfahren daher nicht die Verwendung eines Haftvermittlers. Weiterhin kann dieses Verfahren mit in der Kunststofftechnologie üblichen Werkzeugen durchgeführt werden und benötigt nicht die für das K&K-Verfahren notwendigen speziellen Werkzeuge. Schließlich kann ebenfalls auf eine Verstärkung der Kunststoff-Komponente durch Verstärker oder Füllstoffe, beispielsweise Glasfasern oder Graphit, verzichtet werden, da die Kunststoff-Komponente lediglich einer Wärmebehandlung, aber keiner Vulkanisation unterzogen wird.

Die vorliegende Erfindung betrifft ferner einen Gummi-Kunststoff-Verbund, erhältlich durch das erfindungsgemäße Verfahren.

Der erfindungsgemäße Gummi-Kunststoff-Verbund kann in zahlreichen Anwendungen zum Einsatz kommen, beispielsweise in komplexen Bauteilen, Baugruppen oder Composites für den Automobilbau. Der erfindungsgemäße Gummi-Kunststoff-Verbund kann aber auch beispielsweise in Schuhen Anwendung finden. Dementsprechend betrifft die vorliegende Erfindung weiterhin einen Schuh, umfassend den erfindungsgemäßen Gummi-Kunststoff-Verbund. Vorzugweise handelt es sich dabei um einen Fußballschuh, wobei die Sohle des Fußballschuhs die Kunststoff-Komponente des Gummi-Kunststoff-Verbundes und die Stollen die Gummi-Komponente des Gummi-Kunststoff-Verbundes darstellen.

Die Erfindung wird nunmehr anhand von Beispielen näher erläutert.

### Beispiele

Es wurden Gummi-Kunststoff-Verbunde mit dem erfindungsgemäßen Verfahren hergestellt, wobei ein HNBR-Kautschuk und ein PA612-Kunststoff verwendet wurden. Die Vulkanisation erfolgte bei einer Temperatur von 140°C bis zu einem Vulkanisationsgrad von 20%. Danach wurde innerhalb von 20 Minuten auf eine Temperatur von 40°C abgekühlt. Danach erfolgte das Überspritzen mit dem Kunststoff und eine anschließende Wärmebehandlung bei 130°C für 2 Stunden.

Die erhaltenen Gummi-Kunststoff-Verbunde wurden einem Trennversuch unterzogen, um zu bestimmen, wie viel Kraft zur Trennung (d.h. bis zur kompletten Abtrennung bzw. bis zur Abtrennung bis Abriss) von Gummi und Kunststoff erforderlich ist. Die Ergebnisse sind in der nachfolgenden Tabelle 1 dargestellt. Für jedes Beispiel wurden vier Proben hergestellt und vermessen, wobei in der nachfolgenden Tabelle jeweils der Durchschnittswert für die vier Proben sowie die Standardabweichung in Klammern angegeben sind.

**Tabelle 1:**

| | Probenbreite [mm] | Kraft [N] | Trennwiderstand [N/mm] | Kohäsivanteil [%] |
|---|---|---|---|---|
| Beispiel 1 (n=4) | 14,08 (0,81) | 89,1 (8,1) | 6,3 (0,4) | 96 (3) |
| Beispiel 2 (Referenz) (n=4) | 14,36 (0,08) | 59,7 (9,5) | 4,2 (0,7) | 5(4) |

Beispiel 1 beschreibt die Messergebnisse für einen Gummi-Kunststoff-Verbund, der durch das erfindungsgemäße Verfahren hergestellt wurde, während bei dem Verfahren zur Herstellung des Gummi-Kunststoff-Verbunds gemäß Beispiel 2 auf den letzten Schritt der Wärmenachbehandlung verzichtet wurde. Es zeigt sich, dass der mit dem erfindungsgemäßen Verfahren hergestellte Verbund eine deutlich größere Kraft für eine Trennung der beiden Komponenten benötigt und somit einen deutlich größeren Trennwiderstand aufweist. Dies bestätigt, dass mit dem erfindungsgemäßen Verfahren ein stabiler Gummi-Kunststoff-Verbund hergestellt werden kann.

## Patentansprüche

1. Verfahren zur Herstellung eines Gummi-Kunststoff-Verbundes, umfassend die folgenden Schritte:
a) das Formen eines unvulkanisierten Elastomers,
b) das teilweise Vulkanisieren des geformten Elastomers bei einer Temperatur von mindestens 140°C bis zu einem Vulkanisationsgrad im Bereich von 10 bis 40%,
c) das Abkühlen des teilweise vulkanisierten Elastomers auf eine Temperatur von weniger als 100°C innerhalb von weniger als 20 Minuten,
d) das Überspritzen des teilweise vulkanisierten Elastomers mit einem Kunststoff, und
e) das Wärmebehandeln des mit einem Kunststoff überspritzten, teilweise vulkanisierten Elastomers bei einer Temperatur im Bereich von 100°C bis 170°C für eine Dauer von 5 Minuten bis 5 Stunden, um die Vulkanisation zu vervollständigen und einen Gummi-Kunststoff-Verbund auszubilden.

2. Verfahren nach Anspruch 1, wobei das unvulkanisierte Elastomer aus der Gruppe, bestehend aus Polyacrylat-Kautschuk (ACM), Ethylen-Acrylat-Kautschuk (AEM/EAM), Ethylen-Propylen-Dien-Mischpolymerisat (EPDM), Ethylen-Propylen-Mischpolymerisat (EPM), Fluor-Kautschuk (FKM), (teil)hydriertem Nitrilkautschuk (HNBR), Carboxylgruppen-haltigem Nitril-Kautschuk (XNBR), Nitril-Butadien-Kautschuk (NBR), Natur-Kautschuk (NR), Styrol-Butadien-Kautschuk (SBR), Methyl-Vinyl-Silicon-Kautschuk (VMQ), Polybutadien-Kautschuk (BR), Polyisopren-Kautschuk (IR) und Kombinationen davon, ausgewählt wird.

3. Verfahren nach Anspruch 1 oder 2, wobei der Kunststoff aus der Gruppe, bestehend aus Polyamid (PA), Polyphenylenether (PPE), Polyphthalamid (PPA), Polyurethan (PU), Polyetherblockamid (PEBA) und Kombinationen davon, ausgewählt wird.

4. Verfahren nach Anspruch 3, wobei der Kunststoff in Form eines thermoplastischen Elastomers (TPE) oder als Thermoplast-Elastomer-Legierung mit einem Kautschuk, ausgewählt aus der Gruppe, bestehend aus Polyacrylat-Kautschuk (ACM), Ethylen-Acrylat-Kautschuk (AEM/EAM), Ethylen-Propylen-Dien-Mischpolymerisat (EPDM), Ethylen-Propylen-Mischpolymerisat (EPM), Fluor-Kautschuk (FKM), (teil)hydriertem Nitrilkautschuk (HNBR), Carboxylgruppen-haltigem Nitril-Kautschuk (XNBR), Nitril-Butadien-Kautschuk (NBR), Natur-Kautschuk (NR), Styrol-Butadien-Kautschuk (SBR), Methyl-Vinyl-Silicon-Kautschuk (VMQ), Polybutadien-Kautschuk (BR), Polyisopren-Kautschuk (IR) und Kombinationen davon, vorliegt.

5. Verfahren nach einem der Ansprüche 1 bis 4, wobei eine Kunststoff/Elastomer-Kombination, ausgewählt aus der Gruppe, bestehend aus ACM mit PA; AEM/EAM mit PA oder PPA; EPDM mit PPE oder PA; FKM mit PA oder PPA; HNBR mit PA oder PPA; NR/SBR, SBR, SBR/EPDM oder SBR/NBR mit PPE; VMQ mit PA oder PPA; und XNBR mit PA, verwendet wird.

6. Verfahren nach Anspruch 5, wobei als Kunststoff Polyamid (PA) und als Elastomer (teil)hydrierter Nitrilkautschuk (HNBR) verwendet wird.

7. Verfahren nach einem der Ansprüche 1 bis 6, wobei in Schritt b) das Vulkanisieren bis zu einem Vulkanisationsgrad im Bereich von 10 bis 20% durchgeführt wird.

8. Verfahren nach einem der Ansprüche 1 bis 7, wobei das teilweise vulkanisierte Elastomers in Schritt c) auf eine Temperatur von weniger als 80°C innerhalb von weniger als 5 Minuten abgekühlt wird.

9. Verfahren nach einem der Ansprüche 1 bis 8, wobei das Wärmebehandeln in Schritt e) bei einer Temperatur von mindestens 120°C und weniger als 140°C für eine Dauer von 1 bis 3 Stunden durchgeführt wird.

10. Verfahren nach einem der Ansprüche 1 bis 9, wobei der Kunststoff keine Verstärker und Füllstoffe, vorzugsweise ausgewählt aus Glasfasern und Graphit, enthält.

11. Verfahren nach einem der Ansprüche 1 bis 10, wobei das Verfahren nicht die Verwendung eines Haftvermittlers umfasst.

12. Verfahren nach einem der Ansprüche 1 bis 11, wobei die Schritte a) und b) gleichzeitig in einer Vulkanisationspresse durchgeführt werden.

13. Verfahren nach einem der Ansprüche 1 bis 12, wobei das teilweise vulkanisierte Elastomer nach Schritt c) in einer Spritzgussform platziert wird und in dieser Schritt d) durchgeführt wird.

## Claims

1. Method for producing a rubber-plastic composite, comprising the following steps:
a) shaping an unvulcanized elastomer,
b) partially vulcanizing the shaped elastomer at a temperature of at least 140°C up to a degree of vulcanization in the range from 10% to 40%,
c) cooling the partially vulcanized elastomer to a temperature of less than 100°C within less than 20 minutes,
d) overmoulding the partially vulcanized elastomer with a plastic, and
e) heat treating the partially vulcanized elastomer overmoulded with a plastic at a temperature in the range from 100°C to 170°C for a duration of from 5 minutes to 5 hours to complete the vulcanization and form a rubber-plastic composite.

2. Method according to Claim 1, wherein the unvulcanized elastomer is selected from the group consisting of polyacrylate rubber (ACM), ethylene-acrylate rubber (AEM/EAM), ethylene-propylene-diene copolymer (EPDM), ethylene-propylene copolymer (EPM), fluoro rubber (FKM), (partially) hydrogenated nitrile rubber (HNBR), carboxylated nitrile rubber (XNBR), nitrile-butadiene rubber (NBR), natural rubber (NR), styrene-butadiene rubber (SBR), methyl-vinyl-silicone rubber (VMQ), polybutadiene rubber (BR), polyisoprene rubber (IR), and combinations thereof.

3. Method according to Claim 1 or 2, wherein the plastic is selected from the group consisting of polyamide (PA), polyphenylene ether (PPE), polyphthalamide (PPA), polyurethane (PU), polyether block amide (PEBA), and combinations thereof.

4. Method according to Claim 3, wherein the plastic is present in the form of a thermoplastic elastomer (TPE) or as a thermoplastic elastomer alloy with a rubber selected from the group consisting of polyacrylate rubber (ACM), ethylene-acrylate rubber (AEM/EAM), ethylene-propylene-diene copolymer (EPDM), ethylene-propylene copolymer (EPM), fluoro rubber (FKM), (partially) hydrogenated nitrile rubber (HNBR), carboxylated nitrile rubber (XNBR), nitrile-butadiene rubber (NBR), natural rubber (NR), styrene-butadiene rubber (SBR), methyl-vinyl-silicone rubber (VMQ), polybutadiene rubber (BR), polyisoprene rubber (IR), and combinations thereof.

5. Method according to any of Claims 1 to 4, wherein a plastic/elastomer combination selected from the group consisting of ACM with PA; AEM/EAM with PA or PPA; EPDM with PPE or PA; FKM with PA or PPA; HNBR with PA or PPA; NR/SBR, SBR, SBR/EPDM or SBR/NBR with PPE; VMQ with PA or PPA; and XNBR with PA, is used.

6. Method according to Claim 5, wherein the plastic used is polyamide (PA) and the elastomer used is (partially) hydrogenated nitrile rubber (HNBR).

7. Method according to any of Claims 1 to 6, wherein in step b) the vulcanization is conducted up to a degree of vulcanization in the range from 10% to 20%.

8. Method according to any of Claims 1 to 7, wherein the partially vulcanized elastomer in step c) is cooled to a temperature of less than 80°C within less than 5 minutes.

9. Method according to any of Claims 1 to 8, wherein the heat treatment in step e) is conducted at a temperature of at least 120°C and less than 140°C for a duration of from 1 to 3 hours.

10. Method according to any of Claims 1 to 9, wherein the plastic contains no reinforcers or fillers, preferably selected from glass fibers and graphite.

11. Method according to any of Claims 1 to 10, wherein the method does not include the use of an adhesion promoter.

12. Method according to any of Claims 1 to 11, wherein steps a) and b) are conducted simultaneously in a vulcanizing press.

13. Method according to any of Claims 1 to 12, wherein the partially vulcanized elastomer after step c) is placed into an injection mould and step d) is conducted in said mould.

## Revendications

1. Procédé de fabrication d'un composite caoutchouc-matière plastique, comprenant les étapes suivantes :
a) la mise en forme d'un élastomère non vulcanisé ;
b) la vulcanisation partielle de l'élastomère mis en forme, à une température d'au moins 140 °C jusqu'à un degré de vulcanisation dans la plage de 10 à 40 %,
c) le refroidissement de l'élastomère partiellement vulcanisé, jusqu'à une température de moins de 100 °C en l'espace de moins de 20 minutes,
d) le surmoulage avec une matière plastique de l'élastomère partiellement vulcanisé, et
e) le traitement thermique de l'élastomère partiellement vulcanisé, surmoulé avec une matière plastique, à une température dans la plage de 100 °C à 170 °C pendant une durée de 5 minutes à 5 heures, afin de compléter la vulcanisation et de former un composite caoutchouc-matière plastique.

2. Procédé selon la revendication 1, dans lequel l'élastomère non vulcanisé est choisi dans le groupe constitué par le caoutchouc polyacrylate (ACM), le caoutchouc éthylène-acrylate (AEM/EAM), un copolymère éthylène-propylène-diène (EPDM), un copolymère éthylène-propylène (EPM), le caoutchouc fluoré (FKM), un caoutchouc nitrile (partiellement) hydrogéné (HNBR), un caoutchouc nitrile contenant des groupes carboxy (XNBR), le caoutchouc nitrile-butadiène (NBR), le caoutchouc naturel (NR), le caoutchouc styrène-butadiène (SBR), le caoutchouc méthyl-vinyl-silicone (VMQ), le caoutchouc polybutadiène (BR), le caoutchouc polyisoprène (IR) et des associations de ceux-ci.

3. Procédé selon la revendication 1 ou 2, dans lequel la matière plastique est choisie dans le groupe constitué par le polyamide (PA), le polyphénylène éther (PPE), le polyphtalamide (PPA), le polyuréthane (PU), le polyéther bloc amide (PEBA) et des associations de ceux-ci.

4. Procédé selon la revendication 3, dans lequel la matière plastique est présente sous forme d'un élastomère thermoplastique (TPE) ou d'un alliage d'élastomère thermoplastique avec un caoutchouc, choisi dans le groupe constitué par le caoutchouc polyacrylate (ACM), le caoutchouc éthylène-acrylate (AEM/EAM), un copolymère éthylène-propylène-diène (EPDM), un copolymère éthylène-propylène (EPM), le caoutchouc fluoré (FKM), un caoutchouc nitrile (partiellement) hydrogéné (HNBR), un caoutchouc nitrile contenant des groupes carboxy (XNBR), le caoutchouc nitrile-butadiène (NBR), le caoutchouc naturel (NR), le caoutchouc styrène-butadiène (SBR), le caoutchouc méthyl-vinyl-silicone (VMQ), le caoutchouc polybutadiène (BR), le caoutchouc polyisoprène (IR) et des associations de ceux-ci.

5. Procédé selon l'une quelconque des revendications 1 à 4, dans lequel est utilisé une association élastomère/matière plastique, choisie dans le groupe constitué par ACM avec PA ; AEM/EAM avec PA ou PPA ; EPDM avec PPE ou PA ; FKM avec PA ou PPA ; HNBR avec PA ou PPA ; NR/SBR, SBR, SBR/EPDM ou SBR/NBR avec PPE ; VMQ avec PA ou PPA ; et XNBR avec PA.

6. Procédé selon la revendication 5, dans lequel on utilise en tant que matière plastique du polyamide (PA) et en tant qu'élastomère du caoutchouc nitrile (partiellement) hydrogéné (HNBR).

7. Procédé selon l'une quelconque des revendications 1 à 6, dans lequel la vulcanisation dans l'étape b) est effectuée jusqu'à un degré de vulcanisation dans la plage de 10 à 20 %.

8. Procédé selon l'une quelconque des revendications 1 à 7, dans lequel l'élastomère partiellement vulcanisé est refroidi dans l'étape c) jusqu'à une température de moins de 80 °C en l'espace de moins de 5 minutes.

9. Procédé selon l'une quelconque des revendications 1 à 8, dans lequel le traitement thermique dans l'étape e) est effectué à une température d'au moins 120 °C et de moins de 140 °C pendant une durée de 1 à 3 heures.

10. Procédé selon l'une quelconque des revendications 1 à 9, dans lequel la matière plastique ne contient pas de matières de renforcement ni de charges, de préférence choisies parmi les fibres de verre et le graphite.

11. Procédé selon l'une quelconque des revendications 1 à 10, dans lequel le procédé ne comprend pas l'utilisation d'un promoteur d'adhérence.

12. Procédé selon l'une quelconque des revendications 1 à 11, dans lequel les étapes a) et b) sont effectuées simultanément dans une presse à vulcanisation.

13. Procédé selon l'une quelconque des revendications 1 à 12, dans lequel l'élastomère partiellement vulcanisé est placé après l'étape c) dans un moule à injection et l'étape d) est effectuée dans ce dernier.
